# EUROPEAN PATENT APPLICATION

(11) **EP 4 850 992 A1**
(43) Date of publication of application: **09.12.2026**
(21) Application number: 25180950.5
(22) Date of filing: 05.06.2025
(51) Int. Cl.: B60S 1/02, B08B 17/02, B60S 1/56, G02B 27/00, G01S 13/931, G01S 7/40

(54) **ARRANGEMENT WITH A VEHICLE PART HAVING A SURFACE AND A CLEANING AND/OR PROTECTIVE DEVICE**

(71) Applicant: HELLA Saturnus Slovenija d.o.o., 1001 Ljubljana (SI)
(72) Inventor: Jezer ek, Nejc, 1230 Domzale (SI)
(74) Representative: Behr-Wenning, Gregor

(57) **Abstract**

An arrangement (1) with a vehicle part (2) having a surface (3) and a cleaning and/or protective device (4) for cleaning the surface (3) from soiling and/or for protecting the surface (3) from mechanical damage, wherein the cleaning and/or protective device (4) comprises the following:
- a coating device (5) for coating the surface (3) of the vehicle part (2) with a solid cover layer (6) which adheres to it in a material-bonding manner,
- a removal device (15) by means of which the solid cover layer (6) can be removed from the surface (3)
- and a control device (16) which is in control connection with the coating device (5) and the removal device (15) in such a way that cleaning cycles can be carried out in which in each case
i) the solid cover layer (6) is applied to the surface (3) by means of the coating device (5) when the removal device (15) is inactive,
ii) thereafter, at a time interval from step i), the solid-state cover layer (6) is removed from the surface (3) with the coating device (5) inactive.

## Description

The invention relates to an arrangement with a vehicle part having a surface and a cleaning and/or protective device for cleaning the surface from soiling and/or for protecting the surface from mechanical damage.

Surfaces, especially on vehicles of all kinds, are not only exposed to the effects of weather (e.g. water and ice) or soiling, but can also be damaged by stone chips, for example. The situation becomes critical when the vehicle part is a cover for a sensor that is crucial for road safety. This can only be guaranteed if the optical functionality is reliable. The problem is therefore that the surface of the optical systems must not only be kept clean, but also protected from damage.

Vehicles are understood here to mean land, water and air vehicles, especially motor vehicles that are provided for autonomous driving. When using sensors on vehicles, it has been shown that under certain weather conditions, such as fog or increased humidity, a thicker layer of dirt can accumulate on the sensors. The electromagnetic waves of the radar sensor are so strongly influenced when passing through the layer of dirt that errors in detection can occur.

In the automotive sector, it is common practice to clean surfaces mechanically. Such a system is economically efficient, however, soiling (e.g. insect residue) can only be partially removed. There is also a risk that the dirt residue will stick to the mechanical wiper and smear over the surface instead of being removed. The surfaces to be cleaned can also be damaged, as dirt can stick to the wiper. This type of operation of the cleaning system can lead to damaged surfaces or, in the long term, to a permanent impairment of the functionality of the systems, such as an accumulation of scratches.

To avoid these disadvantages, DE 10 2013 223 783 A1 proposes a method of cleaning the surface of a vehicle part that makes it more difficult for dirt to adhere and ice to form by using an external ultrasonic transducer coupled to the surface to apply an ultrasonic frequency to the surface.

Another alternative to mechanical wiping is the use of special coatings (e.g. wax, coatings containing nanoparticles, etc.) or surface treatments (e.g. nanotextured surfaces) that make the treated surface hydrophobic. Such surfaces are given self-cleaning properties because water, mud and dirt slide off the surface as they cannot adhere to it. However, such treatments also have disadvantages such as high costs and a lack of mechanical resistance. Due to their low durability, such surfaces require special care, as any physical contact such as stone chips on the surface, scratches or insect residues can damage the hydrophobic coating and the self-cleaning properties are reduced or lost. Changes to the hydrophobic effect can also be caused by mud, dust or ice.

The problem is particularly serious for monitoring devices in vehicles, where the information must be evaluated in real time to ensure safe control of the vehicle under all circumstances. To ensure that the control system can access reliable information from the monitoring device at all times, the surface must be free of dirt and protected from damage.

It is therefore a task of the present invention to overcome at least one of the disadvantages described above. In particular, it is the task of the invention to prevent contaminants from adhering to the surface of a vehicle part and/or to remove the contaminants reliably and residue-free. A further task is to protect the surface of the vehicle part against mechanical damage.

This task is solved by an arrangement with a vehicle part having a surface and a cleaning and/or protective device for cleaning the surface from soiling and/or for protecting the surface from mechanical damage, wherein the cleaning and/or protective device comprises the following:
- a coating device for coating the surface of the vehicle part with a solid cover layer which adheres to it in a material-bonding manner, wherein the coating device
   a) - a storage container for holding a cover layer material that is solid at ambient temperature,
      - a heater by means of which the cover layer material in the storage container can be heated in such a way that it liquefies, and
      - an application device by means of which the liquid cover layer material for coating the surface with the solid cover layer can be applied to the surface,
      or
   b) - a coating solution container for containing a coating solution comprising a coating solvent and coating material dissolved therein which is solidifiable by evaporation of the coating solvent, and
      - an application device by means of which the coating solution for coating the surface of the vehicle part with the solid cover layer can be applied to the surface,
- a removal device by means of which the solid cover layer can be removed from the surface, and
- a control device which is in control connection with the coating device and the removal device in such a way that cleaning cycles can be carried out in which in each case
   i) with the removal device inactive, the coating device is used to apply the solid cover layer to the surface,
   ii) then, at a time interval from step i), the solid-state cover layer is removed from the surface while the coating device is inactive, and
   iii) steps i) and ii) are repeated one or more times as appropriate.

The fact that a coating device for coating the surface of the vehicle part with a solid-state cover layer adhering to it and a removal device, by means of which the solid-state cover layer can be removed from the surface, are provided has the advantage that the applied solid-state cover layer only remains on the surface temporarily.

Applying the cover coat protects the surface of the vehicle part. It is then removed together with the contaminants that accumulate on the cover layer. This eliminates the need for mechanical scrubbing, for example, to remove the contaminants from the surface. Advantageously, the coating is applied before impurities can accumulate on the surface and the applied coating thus prevents dirt from adhering to the surface. As the dirt does not come into direct contact with the surface, mechanical damage to the surface can advantageously be avoided.

It is also possible to apply a solid cover layer to the surface of the vehicle part to which dirt particles are already adhering. The advantage here is that the existing dirt is encapsulated by the solidified solid cover layer. Here too, the temporarily applied solid cover layer is removed in accordance with a cleaning cycle. Advantageously, even small dirt particles, such as insect residue, can be removed without leaving any residue. The fact that the solid cover layer is applied to the contaminants increases the cumulative mass of the contaminants and, due to the inertial forces, even the smallest contaminants can be thoroughly, quickly and completely removed from the surface.

The coating device advantageously comprises
a) a storage container, a heater and an application device, so that a cover layer material which is solid at ambient temperature can be heated in such a way that it liquefies and can be applied to the surface in liquefied form as a solid cover layer by means of the application device. By heating the material up to its melting point, which can be between 60°C and 100°C, for example, the material is melted and can be applied in a liquefied form.

In a further advantageous embodiment, the coating device comprises
b) a coating solution container for holding a coating solution and an application device. The container holds a coating solvent and a coating material dissolved therein. Advantageously, a plurality of variants of the starting materials (coating layer material and coating solvent) can thus be used to coat the surface with the temporary solid-state coating layer:
For example only a few solids and solvents examples are presented (and it is not solely based on the presented ones): shellac in combination with ethanol/denatured alcohol; beeswax in combination of etherical oils/ether; carnauba wax in combination with ethylacetate/xylene; sugar (e.g. sucrose, glucose,...) or sugar alcohol (e.g. xylitol, isomalt, ...) mixed with binders (e.g. dextrin) in combination with water/ethanol; magnesium carbonate in combination with ethanol and rosin/resin.

The resulting coating solution is applied to the surface using an application device. As the coating solvent it contains evaporates, the solid cover layer forms on the surface of the vehicle part. Advantageously, this phase change can then be reversed as soon as a coating solvent is reapplied to the solid cover layer adhering to the surface. It is also advantageous that these material combinations also exhibit weather and UV resistance as well as scratch resistance in solidified form as a solid cover layer.

The materials are advantageously selected so that they do not obstruct radar waves when the solid-state cover layer is applied to a surface of a sensor, for example.

Since the cleaning and/or protection device comprises a removal device and a control device which is in control connection with the coating device and the removal device, cleaning cycles can be carried out so that the applied solid cover layer can be removed as required.

The fact that the removal device is activated as soon as an unacceptable level of soiling is detected has the advantage that the solid-state cover layer only remains on the surface temporarily and soiling cannot occur at any time to such an extent that the functionality of a sensor, for example, is impaired. The solid-state cover layer traps the contaminants and as soon as the concentration of the contaminants is too high, the device removes the temporarily applied solid-state cover layer together with the contaminants. The removal device can be designed differently depending on the application. For example, the solid cover layer is melted off by heat, broken up by mechanical forces or dissolved by reapplying solvent. Once the contaminated solid cover layer has been removed, a new solid cover layer can be applied by the coating device so that the surface continues to be protected. An advantage of such a process is that it is automated by means of a control device. Advantageously, the arrangement according to the invention increases the service life of the surface of the vehicle part, as any minor damage that may occur (e.g. due to small stones - shallow scratches) remains on the solid cover layer. When the solid-state cover layer is replaced, the minor damage is also removed and cannot impair the functionality of the sensor as it is also removed. A new solid-state cover layer can then be applied to the surface.

The fact that the arrangement does not use conventional wipers like the systems of the prior art has the advantage that fewer moving parts need to be installed and that the access of contaminants to the surface to be protected is actively prevented.

The application and removal of such a temporary solid cover layer that adheres to the surface is a reliable method of keeping the beam path of a sensor clear.

The fact that the removal device has a frequency generator and a vibration converter which can be controlled thereby and by means of which the surface of the vehicle part is mechanically coupled to detach the solid cover layer, results in the advantage that the solid cover layer is detached from the surface together with the soiling by means of ultrasound. The frequency is selected in such a way that the detachment of the solid cover layer with the soiling or icing is achieved by vibration and no damage to the surface or the vehicle part occurs.

In the context of the invention, it can be advantageous if the removal device comprises
- a removal solvent container for holding a removal solvent for the cover layer material and
- an application device by means of which the removal solvent can be applied to the surface to dissolve the solid cover layer arranged on the surface.

By applying the removal solvent, for example alcohol, from the application device, it is advantageously possible to dissolve the solid cover layer. As the coating of the surface is reversible, the coating and removal processes are coordinated and a cost-effective option is provided.

Because the removal device has a heating means by means of which the surface of the vehicle part can be heated to remove the solid cover layer, the solid cover layer is melted off the surface again by heat in a reversible manner. This can be done using an IR LED, for example.

The application device has at least one spraying device which is designed
- in alternative a) of claim 1 for spraying the surface with the liquefied cover layer material,
- in alternative b) of patent claim 1 for spraying the surface with the coating solution.

The spraying device has at least one spray nozzle which is directed onto the surface of the vehicle part and which is connected to the storage container or the coating solution container via a line in which a pump is arranged.

Advantageously, the liquefied coating material or the coating solution can be applied to the surface of the vehicle part using spray nozzles with very little loss and therefore at low cost. The fact that the coating material is provided in liquid form means that the coating is applied efficiently and quickly. On the one hand, the cover coat material can be melted and applied by heating to the melting point (60-100°C) . Secondly, the cover layer material can be dissolved in solvents (e.g. water, ethanol, denatured alcohol, ethyl acetate, etc..) to obtain a liquid form for application. This has the advantage that a variety of starting materials can be selected. Because the liquid is applied to the target surface with at least one spray nozzle, solidification takes place promptly by cooling the liquefied cover layer material or by evaporating the coating solvent of the coating solution in order to obtain a solid cover layer that adheres to the material. Advantageously, the liquefied masking layer material can be applied in a very controlled manner using a spray nozzle, as it is applied to the surface of the vehicle part within the limits of its dimensions. A further advantage of application by means of a spray nozzle is that the material can be precisely dosed and thus applied homogeneously so that it quickly solidifies after application to form a homogeneous and stable solid cover layer.

The fact that the application device has an active temperature control device can accelerate the solidification of the cover layer material.

The temperature control device comprises at least one first active temperature control element for controlling the temperature of the storage container or the coating solution container and/or at least one second active temperature control element for controlling the temperature of the surface of the vehicle part. By creating a temperature gradient between the coating solution in the storage container and the surface, the solidification of the cover layer material can be further accelerated.

Advantageously
- the coating solvent is liquid at ambient temperature and the temperature control device is designed as a heating device for vaporating the coating solvent, or
- the coating solvent is gaseous at ambient temperature and the temperature control device is designed as a cooling device for liquefying the coating solvent.

Advantageously, the temperature control device can have a temperature control element designed as an infrared LED.

This can be achieved by various combinations (e.g. liquid is preheated; temperature fluctuations of the target surface - such as heating with infrared LEDs when applying alcohol or cooling with a coolant, e.g. CO₂, when the liquid needs to cool down; etc.), so that a flexible solution is possible depending on the application.

In that the control device has at least one sensor for detecting a soiling state of the surface of the vehicle part and/or of the solid cover layer, and in that the control device is designed in such a way and is in control connection with the application device and the removal device, that a cleaning cycle is carried out upon detection of the soiling state on the surface of the vehicle part or step ii) of claim 1 and optionally step i) of claim 1 thereafter upon detection of the soiling state on the solid cover layer, the advantage is that the soiling condition can be detected and a cleaning cycle is activated before the degree of soiling impairs the functionality of the sensor. The cleaning cycle causes the solid-state cover layer to be applied to the soiling by means of a coating device and then the solid-state cover layer with soiling is removed by means of a removal device. If the detected soiling is on an already applied solid cover layer, the soiling is removed with the solid cover layer using the removal device when the coating device is inactive. The detection of an excessive amount of soiling on the surface can be caused, for example, by excessive noise on the detector, excessive attenuation of the returning radar waves, excessive weight fluctuations of the radome, in order to subsequently activate the cleaning cycle.

The fact that the control device has means for detecting a vehicle standstill and is designed in such a way that, when the soiling state is detected, step ii) of claim 1 is only started when the vehicle comes to a standstill after the soiling state has been detected has the advantage that the removed solid cover layer is not distributed on the roadway while the vehicle is moving, but can be disposed of in the selected vehicle environment of the parked vehicle if it is biodegradable.

When the vehicle is stopped, the system removes the solid cover layer together with the soiling and applies a new cover layer. This has the advantage that the cleaning process is not disturbed by the airstream.

In the context of the invention, it can be advantageous if the removal device has a collecting device for collecting the removal solution obtained by dissolving the solid cover layer in the removal solvent and any contamination particles contained therein, and if the collecting device for reusing the removal solvent is connected to the removal solvent container via a return line in which a filter for retaining the contamination particles and a pump are arranged. This provides an environmentally friendly solution that reuses the filtered material so that it can be reapplied.

Advantageously, the solid-state cover layer can be melted or dissolved several times and then reused. This makes the device according to the invention sustainable.

If the vehicle part is a cover for a sensor, in particular a radome of a radar sensor, the materials for the solid-state cover layer can be selected in such a way that the radar beams are not attenuated and wave/signal transparency (radio, radar, lidar) is ensured so that the functionality of the sensor is not impaired.

Radar sensors are used for a variety of warning systems, semi-autonomous systems and autonomous systems in vehicles. Such systems include proximity detection, which can be used for parking assistance, adaptive cruise control, accident avoidance and blind spot detection.

Embodiments of the invention are explained in more detail below. It shows:
- Fig. 1: a schematic representation of a first embodiment of an arrangement having a radome for a radar distance sensor of a motor vehicle and a cleaning and/or protective device for cleaning the surface of the radome,
- Fig. 2: a schematic representation of the arrangement shown in Fig. 1 after the application of a solid-state cover layer to an outer surface of the radome,
- Fig. 3: a representation similar to Fig. 2, but with a dirt particle arranged on the solid cover layer,
- Fig. 4: the arrangement shown in Fig. 3 during the shattering of the solid cover layer with the aid of ultrasonic waves,
- Fig. 5: the arrangement shown in Fig. 4 after detachment of the solid cover layer and the dirt particle adhering to it from the surface of the radome,
- Fig. 6: a representation similar to Fig. 1, but with a dirt particle arranged on the surface of the radome,
- Fig. 7: a schematic representation of the arrangement shown in Fig. 6 after the application of a solid cover layer to the outer surface of the radome and the dirt particle,
- Fig. 8: the arrangement shown in Fig. 7 during the shattering of the solid cover layer with the aid of ultrasonic waves,
- Fig. 9: the arrangement shown in Fig. 8 after detachment of the solid cover layer and the dirt particle enclosed therein from the surface of the radome, and
- Fig. 10: a schematic representation of a second embodiment of an arrangement which has a radome for a radar distance sensor of a motor vehicle and a cleaning and/or protective device for cleaning the surface of the radome.

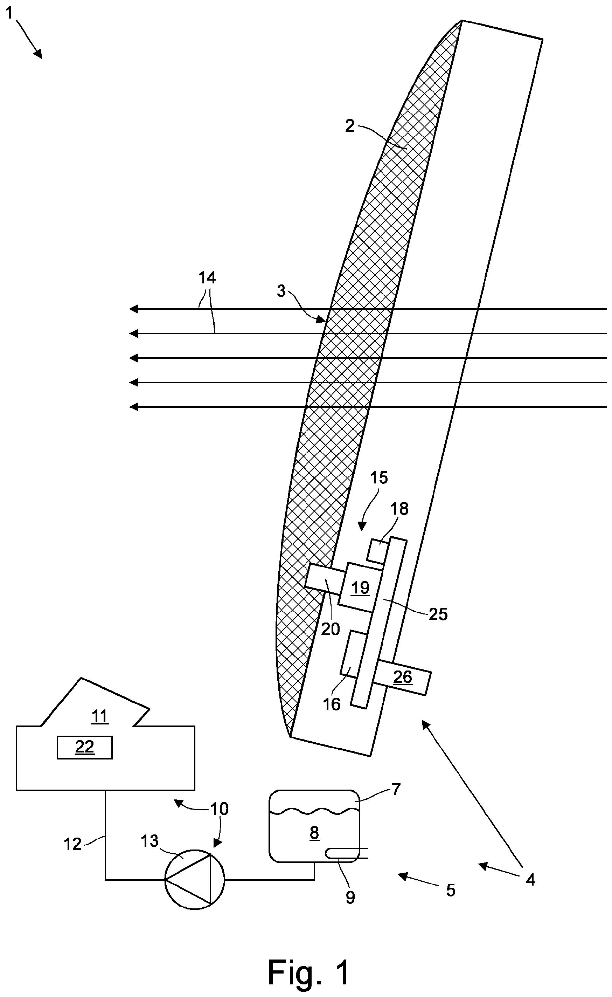

An arrangement designated as a whole as 1 in Fig. 1 has a vehicle part 2 designed as a radome for a radar distance sensor with an outer surface 3 and a cleaning and/or protective device 4 for cleaning the surface 3 of dirt and for protecting the surface 3 from mechanical damage. The radar distance sensor has a radar antenna and a known radar electronics that interact with a radar antenna for transmitting and receiving radar waves. The radar electronics and the radar antenna are not shown in detail in the drawing.

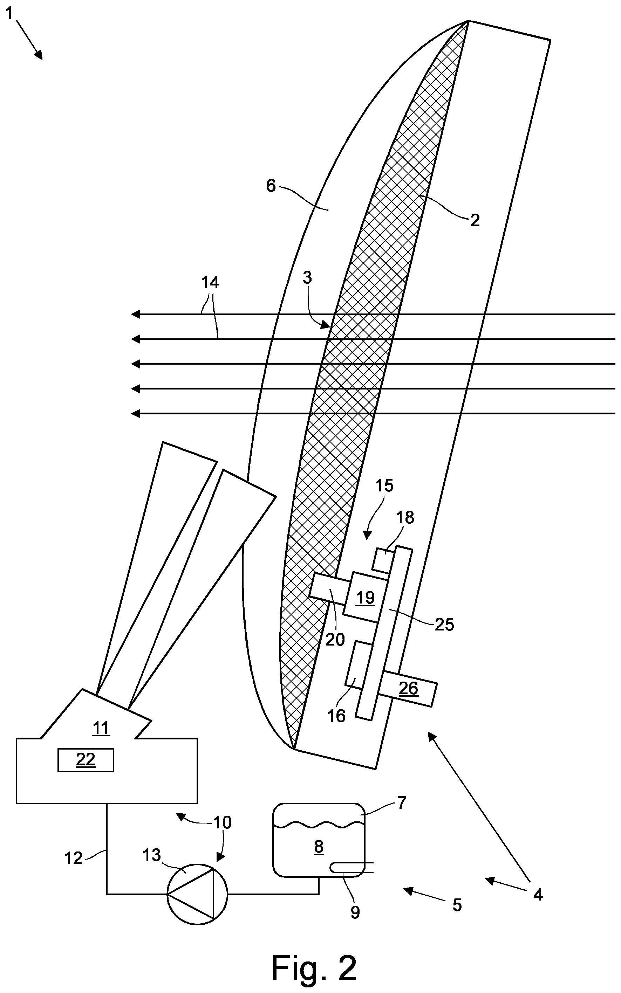

The cleaning and/or protection device 4 has a coating device, labelled 5 in its entirety, for coating the surface 3 with a solid cover layer 6 (Fig. 2) which adheres to it in a materially bonded manner.

The coating device 5 has a storage container 7 for holding a cover layer material 8 which is solid at the usual ambient temperatures to which the vehicle part 2 is exposed when in use. The melting point of the cover layer material 8 is at least 60°C. Preferably, the melting point of the cover layer material 8 is at least 80°C or even at least 100°C. This ensures that the solid cover layer 6 is in a solid state at the operating temperatures to which the surface 3 of the vehicle part 2 is exposed when it is installed in a motor vehicle.

The coating device 5 also has a heater which has a first heating element 9 on or in the storage container 7, by means of which the cover layer material 8 located in the storage container 7 can be heated in such a way that it liquefies.

To coat the surface 3 of the vehicle part 2 with the solid cover layer 6, the cleaning and/or protective device 4 has an application device 10 designed as a spraying device. The application device 10 has a plurality of spray nozzles 11 directed at the surface of the vehicle part, which is connected to the storage container 7 via a line 12 in which a pump 13 is arranged. The pressure generated by the pump 13 and the geometry of the spray nozzles 11 are matched to each other in such a way that at least one area of the surface 3, which is penetrated by radar beams 14 during operation of the radar distance sensor, lies completely within the radiation range of the spray nozzles 11. The spray cones emitted by the spray nozzles 11 are only shown schematically in Fig. 2. The cover layer material 8 is selected so that the solid cover layer 6 is permeable to the radar beams 14.

The cleaning and/or protective device 4 also comprises a removal device 15, by means of which the solid cover layer 6 can be removed from the surface 3.

The cleaning and/or protection device 4 has a control device 16, which is in control connection with the coating device 5 and the removal device 15 via electrical lines not shown in detail in the drawing, in such a way that cleaning cycles can be carried out which each comprise
i) an application step for applying the solid cover layer 6 to the surface 3 and
ii) a removal step for removing the solid cover layer 6 from the surface 3.

In the application step, the coating device is activated when the removal device is inactive. In the removal step, the removal device is activated when the coating device is inactive. A time interval is provided between the application step and the subsequent removal step. The aforementioned steps i) and ii) are repeated if necessary. The cleaning and/or protective device 4 can therefore be used to temporarily apply a solid cover layer 6 to the surface 3, which is removed as required and replaced by a new solid cover layer 6.

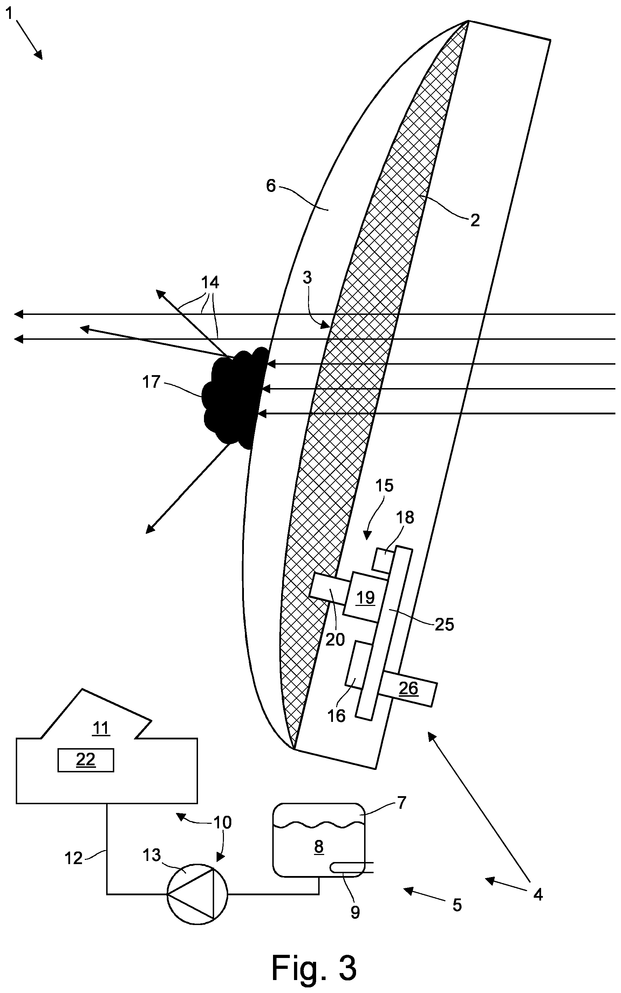

The layer thickness of the solid cover layer 6 and the mechanical properties of the cover layer material 8 are selected in such a way that contamination particles 17, which normally impact on the surface 3 of the vehicle part 2 during use, only come into contact with the solid cover layer 6 without contacting the surface 3 (Fig. 3). The contamination particles 17 remain adhered to the solid cover layer 6 and are removed from the surface 3 together with the cover layer 6 when the cover layer 6 is removed from the surface 3.

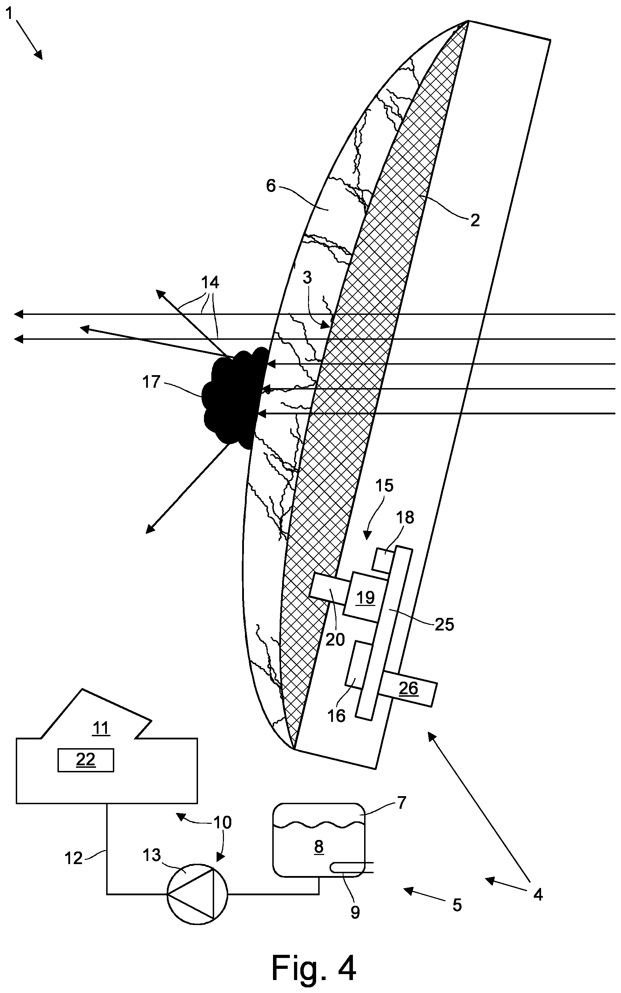

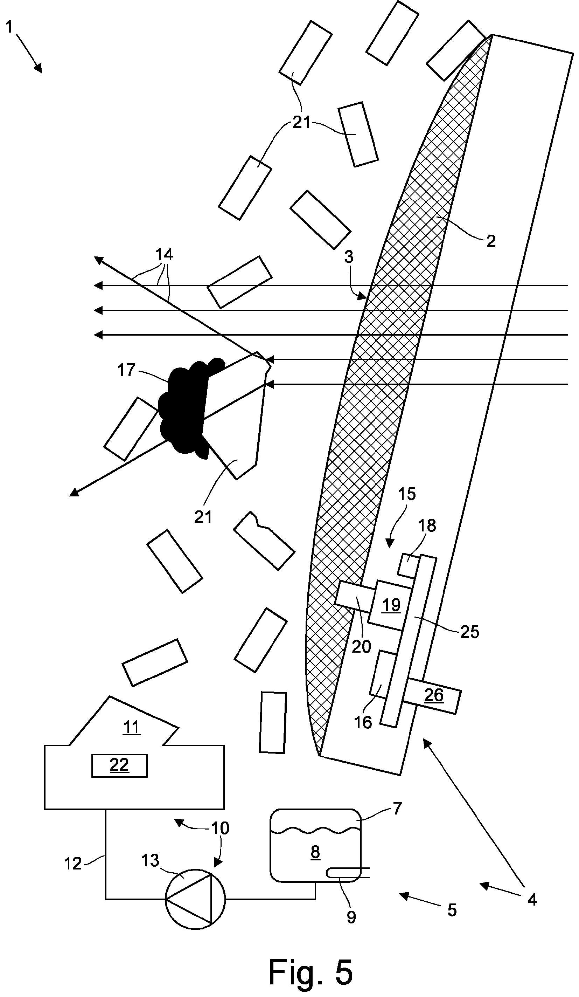

In the embodiment example shown in Figs. 1 to 5, the removal device 15 has a frequency generator 18, which is connected to the vibration converter 19 via electrical lines not shown in detail in the drawing in order to generate ultrasonic vibrations. The vibration converter 19 is coupled to the vehicle part 2 via a mechanical transmission element 20 in order to transmit the ultrasonic vibrations to the surface 3 and the solid cover layer 6 adhering to it. The ultrasonic vibrations cause the solid cover layer 6 to move back and forth across the surface 3. The frequency and amplitude of the ultrasonic vibrations are selected such that the ultrasonic vibrations cause cracks in the solid cover layer 6 (Fig. 4), so that the solid cover layer 6 is shattered into fragments 21 and detaches from the surface 3. This can be achieved by ensuring that the frequency of the ultrasonic vibrations corresponds to the resonant frequency of the vehicle part 2 or a partial area of the vehicle part 2 with the surface 3 to be cleaned. The vehicle part 2 is dimensioned in such a way that it is not damaged by the ultrasonic vibrations.

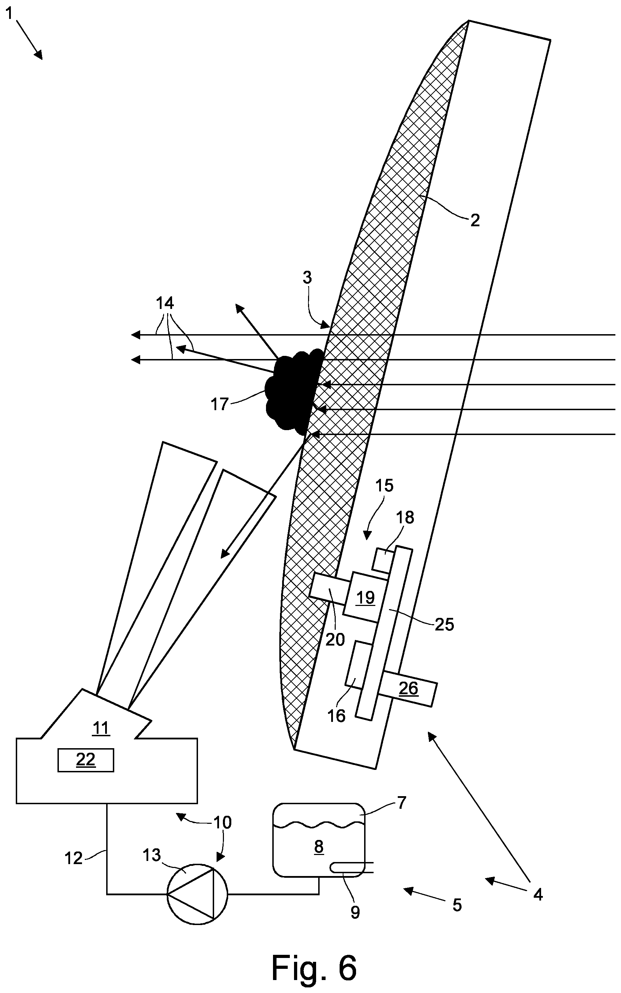

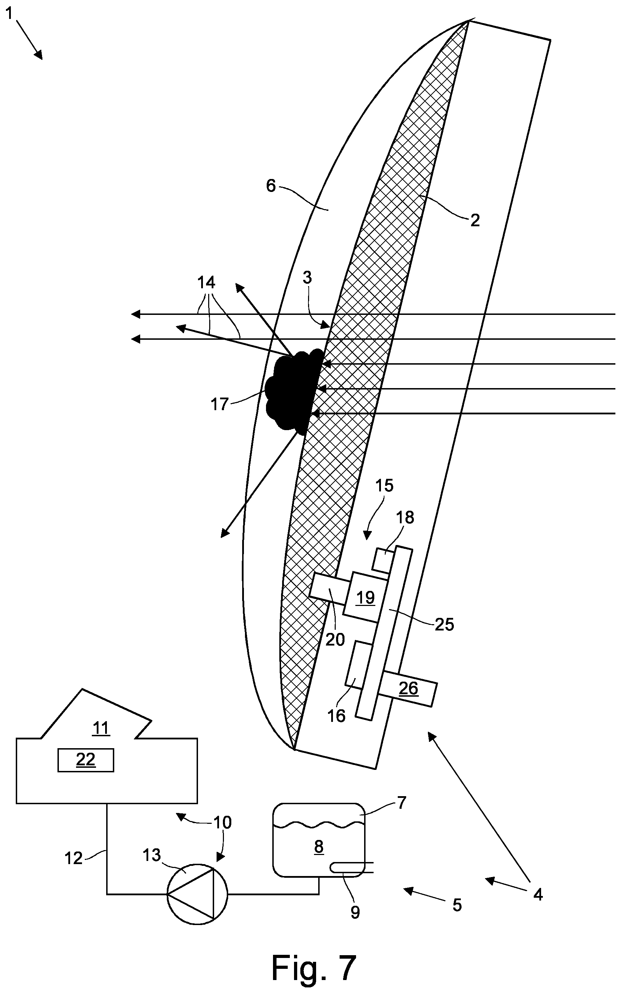

As can be seen in Figs. 6 to 9, the cleaning and/or protective device 4 can also be used to remove contamination particles 17 from the surface 3 which are already in contact with the surface 3 and adhere to it before the surface 3 is coated with the solid cover layer 6. For this purpose, the solid cover layer 6 is applied to the surface 3 of the vehicle part during the application step in such a way that the solid cover layer 6 encloses at least a partial area of the contamination particle 17. In the embodiment example shown in Fig. 7, the contamination particle 17 is even arranged completely within the solid cover layer 6.

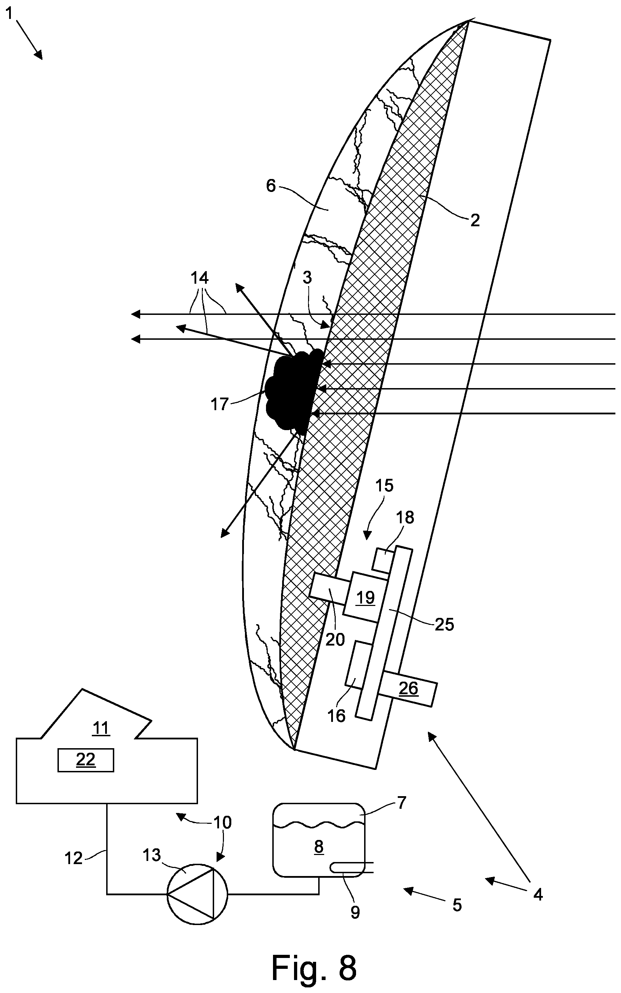

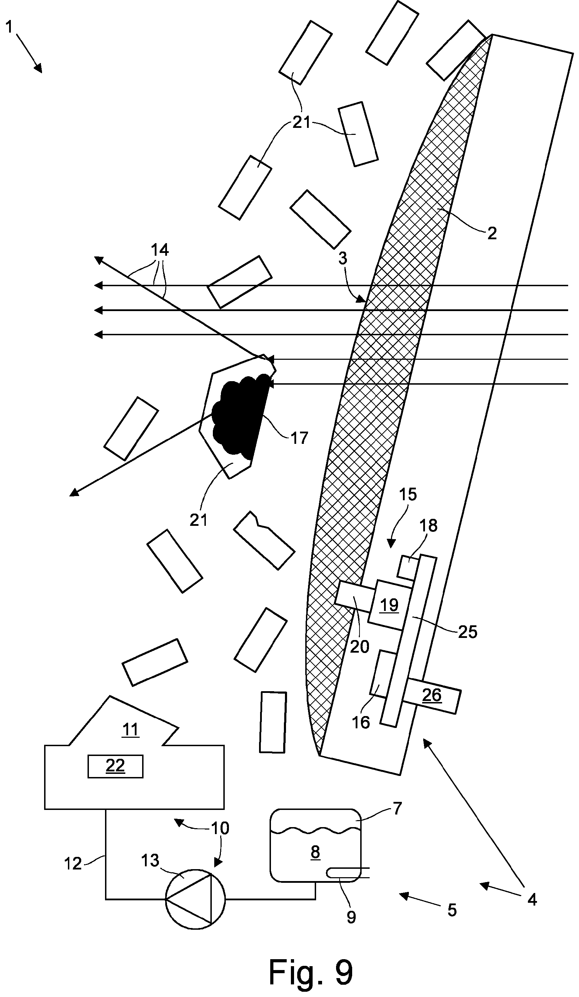

When the solid cover layer 6 is vibrated during the removal step with the aid of the removal device 15 (Fig. 8), the solid cover layer 6 is shattered into fragments 21 which detach from the surface 3 (Fig. 9). The contamination particle 17 is removed from the surface 3 together with a fragment 21 by which it is enclosed. The surface 3 is then coated with a new solid cover layer (Fig. 2).

In addition to the first heating element 9 arranged on the storage container 7, the heater has a second heating element 22, which is connected to the spray nozzles 11 in a heat-conducting manner in order to heat them. This prevents the cover layer material from solidifying in the spray nozzles 11 after the solid cover layer has been applied. If necessary, further heating elements can be provided on the line 12 and/or the pump 13 in an appropriate manner.

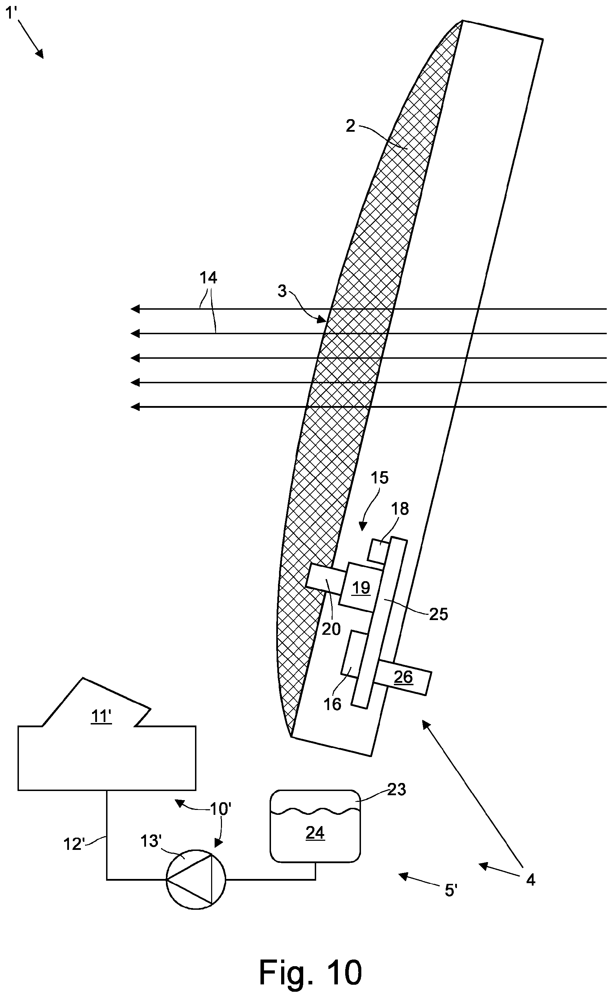

In the embodiment example shown in Fig. 10, the arrangement 1' has an application device 10' with a coating device 5', which has a coating solution container 23 for holding a coating solution 24, which comprises a coating solvent and cover layer material dissolved therein, which can be solidified by evaporation of the coating solvent. In this embodiment example, the coating solution 24 is applied to the surface 3 in the application step with the aid of spray nozzles 11' and a pump 13'. The pump 13' is arranged in a line 12' that connects the spray nozzles 11' to the coating solution container 23.

The solvent contained in the coating solution 24 evaporates after application to the surface 3, whereby this is coated with the solid cover layer 6. In this embodiment example, the surface 3 can be heated by means of a heating element, which is not shown in detail in the drawing, in order to accelerate the evaporation of the solvent and thus the application step.

In the embodiments described above, a sensor, not shown in detail in the drawing, is integrated into the radar distance sensor for detecting the contamination state of the surface 3 of the vehicle part 2 and/or the solid cover layer 6. The sensor has a noise distance detector for detecting the noise distance of the radar radiation reflected back to the radar antenna by an object located in the radiation range of the radar antenna of the radar distance sensor. The signal-to-noise ratio detector is connected to a comparison device to compare the measured signal-to-noise ratio with a limit value. If the limit value is exceeded, it is assumed that the pollution condition has occurred. In this case, the comparison device transmits a corresponding signal to the control device 16, which then initiates a cleaning cycle.

It should also be mentioned that the control device 16, the frequency generator 18 and the vibration converter 19 are arranged on a printed circuit board 25, which is arranged on the rear of the vehicle part 2. The printed circuit board 25 has electrical connections 26 for connection to a power supply, the application device 10, 10' and the sensor for detecting the contamination status.

### List of reference numbers

- 1: Arrangement
- 1': Arrangement
- 2: Vehicle part
- 3: Surface
- 4: Cleaning and/or protection device
- 5: Coating device
- 5': Coating device
- 6: Solid cover layer
- 7: Storage container
- 8: Cover layer material
- 9: First heating element
- 10: Application device
- 10': Application device
- 11: Spray nozzle
- 11': Spray nozzle
- 12: Line
- 12': Line
- 13: Pump
- 13': Pump
- 14: Radar beam
- 15: Removal device
- 16: Control device
- 17: Contamination particles
- 18: Frequency generator
- 19: Vibration converter
- 20: Transmission element
- 21: Fragments
- 22: Second heating element
- 23: Coating solution container
- 24: Coating solution
- 25: Printed circuit board
- 26: Electrical connections

## Claims

1. Arrangement (1, 1') with a vehicle part (2) having a surface (3) and a cleaning and/or protective device (4) for cleaning the surface (3) from soiling and/or for protecting the surface (3) from mechanical damage, wherein the cleaning and/or protective device (4) comprises the following:
- a coating device (5, 5') for coating the surface (3) of the vehicle part (2) with a solid cover layer (6) which adheres to it in a material-bonding manner, wherein the coating device (5, 5')
a) - a storage container (7) for receiving a cover layer material (8) which is solid at ambient temperature,
- a heater, by means of which the cover layer material (8) located in the storage container (7) can be heated in such a way that it liquefies, and
- an application device (10), by means of which the liquid cover layer material (8) can be applied to the surface (3) for coating the surface (3) with the solid cover layer (6),
or
b) - a coating solution container (23), for holding a coating solution (24), which comprises a coating solvent and cover layer material dissolved therein, which can be solidified by evaporation of the coating solvent, and
- an application device (10') by means of which the coating solution (24) for coating the surface (3) of the vehicle part (2) with the solid cover layer (6) can be applied to the surface (3),
- a removal device (15) by means of which the solid cover layer (6) can be removed from the surface (3)
- and a control device (16) which is in control connection with the coating device (5, 5') and the removal device (15) in such a way that at least one cleaning cycles can be carried out in which in each case
i) the solid cover layer (6) is applied to the surface (3) by means of the coating device (5, 5') when the removal device (15) is inactive,
ii) thereafter, at a time interval from step i), the solid-state cover layer (6) is removed from the surface (3) with the coating device (5, 5') is inactive.

2. Arrangement (1) according to claim 1, **characterised in that** the removal device (15) has a frequency generator (18) and a vibration converter (19) which can be controlled thereby and by means of which the surface (3) of the vehicle part (2) is mechanically coupled to detach the solid cover layer (6).

3. Arrangement (1, 1') according to claim 1 or 2, **characterised in that** the removal device (15) comprises
- a removal solvent container for holding a removal solvent for the cover layer material (8) and
- an application device by means of which the removal solvent can be applied to the surface (3) to dissolve the solid cover layer (6) arranged on the surface (3).

4. Arrangement (1, 1') according to one of claims 1 to 3, **characterised in that** the removal device (15) has a heating means by means of which the surface (3) of the vehicle part (2) can be heated to remove the solid cover layer (6).

5. Arrangement (1, 1') according to one of claims 1 to 4, **characterised in that** the application device (10, 10') has at least one spraying device which is designed
- in alternative a) of claim 1 for spraying the surface (3) with the liquefied cover layer material (8),
- in alternative b) of patent claim 1 for spraying the surface (3) with the coating solution (24).

6. Arrangement (1, 1') according to claim 5, **characterised in that** the spraying device has at least one spray nozzle (11, 11') which is directed onto the surface (3) of the vehicle part (2) and which is connected to the storage container (7) or the coating solution container (23) via a line (12, 12') in which a pump (13, 13') is arranged.

7. Arrangement (1, 1') according to one of claims 1 to 6, **characterised in that** the application device (10, 10') has an active temperature control device.

8. Arrangement (1, 1') according to claim 7, **characterised in that** the temperature control device comprises at least one first active temperature control element for controlling the temperature of the storage container (7) or the coating solution container (23) and/or at least one second active temperature control element for controlling the temperature of the surface (3) of the vehicle part (2).

9. Arrangement (1, 1') according to claim 7 or 8, **characterised in that**
- **in that** the coating solvent is liquid at ambient temperature and the temperature control device is designed as a heating device for vaporising the coating solvent (24), or
- **in that** the coating solvent (24) is gaseous at ambient temperature and the temperature control device is designed as a cooling device for liquefying the coating solvent (24).

10. Arrangement (1, 1') according to one of claims 1 to 9, **characterised in that** the control device (16) has at least one sensor for detecting a soiling state of the surface (3) of the vehicle part (2) and/or of the solid cover layer (6), and **in that** the control device (16) is designed in such a way and is in control connection with the application device (10, 10') and the removal device (15) in such a way that
- a cleaning cycle is carried out upon detection of the soiling state on the surface (3) of the vehicle part (2) or
- step ii) of claim 1 and optionally step i) of claim 1 is carried out thereafter upon detection of the soiling state on the solid cover layer (6).

11. Arrangement (1, 1') according to one of claims 1 to 10, **characterised in that** the control device (16) has means for detecting a vehicle standstill and is designed in such a way that when the soiling state is detected, step ii) of claim 1 is only started when the vehicle comes to a standstill after the soiling state has been detected.

12. Arrangement (1, 1') according to one of claims 3 to 11, **characterised in that** the removal device (15) has a collecting device for collecting the removal solution obtained by dissolving the solid cover layer (6) in the removal solvent and any contamination particles (17) contained therein, and **in that** the collecting device for reusing the removal solvent is connected to the removal solvent container via a return line, in which a filter for retaining the contamination particles and a pump are arranged.

13. Arrangement (1, 1') according to one of claims 1 to 12, **characterised in that** the vehicle part (2) is a cover for a sensor, in particular a radome of a radar sensor.

## Amended claims

### Amended claims in accordance with Rule 137(2) EPC.

1. Arrangement (1) with a vehicle part (2) having a surface (3) and a cleaning and/or protective device (4) for cleaning the surface (3) from soiling and/or for protecting the surface (3) from mechanical damage, wherein the cleaning and/or protective device (4) has a coating device (5) for coating the surface (3) of the vehicle part (2) with a solid cover layer (6) which adheres to it in a material-bonding manner, wherein the coating device (5) comprises
- a storage container (7) for receiving a cover layer material (8) which is solid at ambient temperature,
- a heater, by means of which the cover layer material (8) located in the storage container (7) can be heated in such a way that it liquefies, and
- an application device (10), by means of which the liquid cover layer material (8) can be applied to the surface (3) for coating the surface (3) with the solid cover layer (6),
the arrangement (1) comprising
- a removal device (15) by means of which the solid cover layer (6) can be removed from the surface (3)
- and a control device (16) which is in control connection with the coating device (5) and the removal device (15) in such a way that at least one cleaning cycle can be carried out in which in each case
i) the solid cover layer (6) is applied to the surface (3) by means of the coating device (5) when the removal device (15) is inactive,
ii) thereafter, at a time interval from step i), the solid-state cover layer (6) is removed from the surface (3) while the coating device (5) is inactive.

2. Arrangement (1) according to claim 1, **characterised in that** the removal device (15) has a frequency generator (18) and a vibration converter (19) which can be controlled thereby and by means of which the surface (3) of the vehicle part (2) is mechanically coupled to detach the solid cover layer (6).

3. Arrangement (1) according to claim 1 or 2, **characterised in that** the removal device (15) comprises
- a removal solvent container for holding a removal solvent for the cover layer material (8) and
- an application device by means of which the removal solvent can be applied to the surface (3) to dissolve the solid cover layer (6) arranged on the surface (3).

4. Arrangement (1) according to one of claims 1 to 3, **characterised in that** the removal device (15) has a heating means by means of which the surface (3) of the vehicle part (2) can be heated to remove the solid cover layer (6).

5. Arrangement (1) according to one of claims 1 to 4, **characterised in that** the application device (10) has at least one spraying device which is designed for spraying the surface (3) with the liquefied cover layer material (8).

6. Arrangement (1) according to claim 5, **characterised in that** the spraying device has at least one spray nozzle (11) which is directed onto the surface (3) of the vehicle part (2) and which is connected to the storage container (7) or the coating solution container (23) via a line (12) in which a pump (13) is arranged.

7. Arrangement (1) according to one of claims 1 to 6, **characterised in that** the application device (10) has an active temperature control device.

8. Arrangement (1) according to claim 7, **characterised in that** the temperature control device comprises at least one first active temperature control element for controlling the temperature of the storage container (7) or the coating solution container (23) and/or at least one second active temperature control element for controlling the temperature of the surface (3) of the vehicle part (2).

9. Arrangement (1) according to one of claims 1 to 8, **characterised in that** the control device (16) has at least one sensor for detecting a soiling state of the surface (3) of the vehicle part (2) and/or of the solid cover layer (6), and **in that** the control device (16) is designed in such a way and is in control connection with the application device (10) and the removal device (15) in such a way that
- a cleaning cycle is carried out upon detection of the soiling state on the surface (3) of the vehicle part (2) or
- step ii) of claim 1 and optionally step i) of claim 1 is carried out thereafter upon detection of the soiling state on the solid cover layer (6).

10. Arrangement (1) according to one of claims 1 to 9, **characterised in that** the control device (16) has means for detecting a vehicle standstill and is designed in such a way that when the soiling state is detected, step ii) of claim 1 is only started when the vehicle comes to a standstill after the soiling state has been detected.

11. Arrangement (1) according to one of claims 3 to 10, **characterised in that** the removal device (15) has a collecting device for collecting the removal solution obtained by dissolving the solid cover layer (6) in the removal solvent and any contamination particles (17) contained therein, and **in that** the collecting device for reusing the removal solvent is connected to the removal solvent container via a return line, in which a filter for retaining the contamination particles and a pump are arranged.

12. Arrangement (1) according to one of claims 1 to 11, **characterised in that** the vehicle part (2) is a cover for a sensor, in particular a radome of a radar sensor.
